# EUROPEAN PATENT APPLICATION

(11) **EP 1 339 257 A2**
(43) Date of publication of application: **27.08.2003**
(21) Application number: 03251160.2
(22) Date of filing: 26.02.2003
(51) Int. Cl.: H05B 1/02

(54) **Electric liquid heating appliances**

(30) Priority: 26.02.2002 GB 0204493
(71) Applicant: STRIX LIMITED, Ronaldsway, Isle of Man IM9 2RG (GB)
(72) Inventor: Taylor, John Crawshaw, Isle of Man IM9 1HA (GB); Scott, Michael James, Port St. Mary Isle of Man IM9 5PH (GB); Meeks, Alan Michael George, Axminster, Devon EX13 5SZ (GB)
(74) Representative: Leckey, David H.

(57) **Abstract**

An electric liquid heating appliance comprises a primary, higher power, heating means for bringing liquid in the appliance to boiling, and a secondary, lower power, heating means for maintaining liquid in the appliance at boiling for a predetermined time after it has boiled, a boiling sensitive control for switching from said primary heating means to said secondary heating means upon liquid in the appliance boiling, and a thermally sensitive control responsive to the temperature of the secondary heating means or heating means associated therewith for discontinuing boiling of the liquid in the vessel after a predetermined time.

## Description

The present invention relates to electric liquid heating appliances and to thermally sensitive controls and heaters for use therewith.

In certain countries where water supplies may not be entirely clean or are highly chlorinated, it is desirable to boil water for a prolonged period, for example for one minute, so as to sterilise or deodorise the water. After boiling, the water may be kept at a relatively high temperature for subsequent use.

The Applicant has already suggested in WO99 / 02080 an appliance and control which will allow the above to be realised. In that control, the power of the heating element of the appliance is reduced upon boiling so as to produce a rolling boil during the period of sterilisation or deodorisation so as to prevent the generation of undue amounts of steam. The period of the reduced power boil is determined by thermal conduction from a sump in the base of the heating chamber to a bimetallic actuator through a thermal conduction member. The temperature of the sump is related to water temperature, so the period of sterilisation or deodorisation is dependent upon the water temperature and continued boiling of the liquid in the vessel.

The present invention seeks to provide an alternative arrangement and from a first aspect provides an electric liquid heating appliance comprising a primary, higher power, heating means for bringing liquid in the appliance to boiling, and a secondary, lower power, heating means for maintaining liquid in the appliance at boiling for a predetermined time after it has boiled, a boiling sensitive control for switching from said primary heating means to said secondary heating means upon liquid in the appliance boiling, and a thermally sensitive control responsive to the temperature of the secondary heating means or heating means associated therewith for discontinuing boiling of the liquid in the vessel after a predetermined time.

Thus in accordance with this invention, the prolonged boiling at a lower power is terminated in dependence upon the temperature of the secondary heating means rather than upon water temperature. This gives a much more accurately determinable length of boiling time than previously.

Put another way, the invention provides an electric liquid heating appliance comprising a primary, higher power, heating means for bringing liquid in the appliance to boiling, and a secondary, lower power, heating means for maintaining liquid in the appliance at boiling for a predetermined time after it has boiled, a boiling sensitive control for switching from said primary heating means to said secondary heating means upon liquid in the appliance boiling, and a timing heater associated with a control for discontinuing boiling of the liquid in the vessel after a predetermined time. The timing heater may be the secondary heater or a part thereof.

The thermally sensitive control preferably comprises a thermally sensitive actuator such as a bimetallic actuator which is arranged thermally remote from the secondary heating means, such that the temperature of the actuator will not reach its operating temperature until a predetermined period of time has elapsed. The actuator may therefore be arranged in a restricted thermally conductive path from the secondary heating means. Preferably, the actuator is arranged at a spacing from the heating means and linked thereto by a thermal conduction member having a known thermal capacity. Depending on the type of heating means used in the appliance, the thermal conduction member may take different forms, as will be discussed further below.

The primary and secondary heating means may both be sheathed electric heating elements or thick film electric heating elements. The primary and secondary heating means may comprise completely separately energisable primary and secondary heating elements, but in a preferred embodiment, the secondary heating means comprises a primary heating element and a secondary heating element connected in series, whereby when the boiling sensitive control operates the secondary heating element is switched into series with the primary heating element thereby reducing the power in the primary heating element. Typically in such circumstances, the secondary heating element will provide the majority of the heating power in the prolonged boil period.

Preferably the secondary heating element comprises a thick-film heating element. In the preferred embodiment, therefore, the thick film heating element comprises an insulating substrate upon which is deposited a thick film heating track.

The heating track preferably has a "timing" section with which the actuator is associated. Preferably the timing section is arranged at one end of the track. The timing section may be arranged on a part of the substrate removed from the main heating means such that the main heating effect is from the timing section of the track. Preferably the actuator is arranged in a region of the substrate spaced from the timing section of the heating track whereby heat is transmitted to the actuator through the substrate, leading to the desired time delay. Typically the substrate is ceramic or a metal coated with an insulating layer.

In the preferred embodiment, the timing section of the track of the secondary heating means is arranged in a circular pattern around an unheated region, and the actuator arranged in thermal contact with that central unheated region. The thermal conduction path and the thermal capacity are matched to give the desired time delay.

Once boiling has been discontinued, the liquid in the appliance may be kept warm by tertiary "keep hot" heating means. Again this may comprise an independently operable tertiary heating element, but in the preferred embodiment, the tertiary heating means comprises a tertiary heating element which is connected in series with the primary and/or secondary heating elements. Thus in the preferred embodiment, the boiling sensitive control preferably comprises means for connecting the secondary element in series with the primary element and the thermally sensitive means comprises means effectively for connecting the third element in series with the first and second elements.

Preferably the tertiary heating element is a thick film heating element, and the tertiary heating means designed to operate continuously, thereby avoiding the need for a thermostatic control.

The tertiary heating element may in fact be connected in parallel with the timing section of the secondary heating element, such that when the thermally sensitive control operates it too is placed in series with the primary heating element. However the relative resistances of the tertiary heating element and the timing section of the secondary heating element are preferably chosen such that essentially no current will flow through the tertiary track in those conditions, such that its heating power is effectively zero.

The boiling sensitive control may be sensitive either to steam generated upon boiling or to the sensing of boiling through some other means, such as sump detection as described in W099/02080.

Where the boiling control is steam activated, preferably means are provided for preventing steam entering, or reducing significantly the amount of steam entering the control during the period of prolonged boiling.

Preferably, therefore, the steam path to the control comprises valve means which closes the steam path after operation of the boiling sensitive control.

This is in itself a novel arrangement, so from a further aspect, the invention provides an electric liquid heating appliance comprising a primary, higher power, heating means for bringing liquid in the appliance to boiling, and a secondary, lower power, heating means for maintaining liquid in the appliance at boiling for a predetermined time after it has boiled, a boiling sensitive control for switching from said primary heating means to said secondary heating means upon liquid in the appliance boiling, and valve means preventing or substantially reducing the amount of steam entering the said control after it has operated.

In the preferred embodiment, the respective actuators operate to trip respective trip levers which may be re-set manually. A further trip lever may be associated with the keep hot heating means, but as stated above, there is preferably no thermally sensitive control associated with this heating means, and this trip lever is preferably operable manually, or in response to the appliance being lifted from its support surface, e.g. a power base. The trip levers associated with the boiling and thermally sensitive controls are also preferably tripped by the appliance being so lifted.

This is in itself a novel arrangement, so from a further aspect the invention provides a liquid heating appliance having primary heating means for heating liquid in the appliance to boiling, secondary heating means for maintaining liquid at boiling for a predetermined period after boiling and tertiary heating means for keeping liquid in the appliance warm after it has boiled, comprising a control configured such that when said appliance is lifted from a supporting base, switch means are opened to disconnect the power supply to all three heating means.

The invention also extends to a control for a liquid heating appliance having primary heating means for heating liquid in the appliance to boiling, secondary heating means for maintaining liquid at boiling for a predetermined period after boiling and tertiary heating means for keeping liquid in the appliance warm thereafter, said control being configured such that when said appliance is lifted from a supporting base, switch means are opened to disconnect the power supply to all three heating means.

Most conveniently, a common trip member may be provided for this purpose.

From a further aspect the invention provides a liquid heating appliance having primary heating means for heating liquid in the appliance to boiling, secondary heating means for maintaining liquid at boiling for a predetermined time after boiling has commenced and tertiary heating means for keeping liquid in the appliance warm thereafter, and a control for supplying power to said heating means, each said heating means having associated therewith a manually operable trip lever within the control.

From a further aspect the invention provides control for a liquid heating appliance having primary heating means for heating liquid in the appliance to boiling, secondary heating means for maintaining liquid at boiling for a predetermined time after boiling has commenced and tertiary heating means for keeping liquid in the appliance warm thereafter, said control supplying power selectively to said heating means, and comprising respective manually operable trip levers associated with said respective heating means.

Preferably the appliance is provided with a overheat protection control. Preferably the primary heating means is provided with one and preferably at least two independently operable overheat protection mechanisms. Preferably these mechanisms are provided in opposite poles of the power supply.

Preferably the overheat protection control is arranged such that it will disconnect power to all three heating means when the appliance overheats. Preferably the overheat control is latched after operation to prevent reenergisation of the heating means. Most preferably the overheat control is latched by the aforementioned trip member such that when the appliance is lifted, the overheat protection control is delatched.

Preferably a or each trip lever of the control is earthed. This means that the or each trip lever may be formed of metal. This is advantageous both in terms of cost, as expensive heat resistant mouldings are not required, and also since metallic parts are less prone to distortion, thereby leading to improved performance of the control. Moreover, earthing the trip lever gives additional protection to the user.

This in itself is a novel arrangement over existing arrangements so from a second aspect, the present invention provides a thermally sensitive control for a liquid heating appliance comprising a trip lever for opening a set of electrical contacts, said trip lever being metallic and earthed.

Preferably, the or each trip lever is mounted to a metallic mounting plate which is itself earthed. The advantage of having a metallic mounting plate is also that it is less prone to thermal distortion and can be placed in close face-to-face relationship with the heaters of the appliance, and is particularly advantageous in terms of cost.

Having a metallic trip lever also considerably facilitates and reduces the cost of the production of the trip lever fulcrum and spring mounting. In particular, if a sufficiently thin gauge of material is used for the trip lever, the traditional knife edge fulcrum can be dispensed with and the edge of the trip lever may abut against a flat reaction surface in the mounting plate. Preferably material less than 1 mm thick is used, more preferably around 0.5 mm. Strengthening flanges may be provided on the trip lever to give it the desired rigidity.

Similarly, the spring mounting on the trip lever can be simplified. It can be formed in the thickness of the metal, with the C spring abutting against that thickness. Locating tongues are preferably provided to maintain the spring in position. Preferably also, the C spring can pass through the plane of the trip lever.

Preferably the or each trip lever is operatively coupled to a contact carrying leaf spring of the control by an insulating push rod mounted on the leaf spring. This arrangement is advantageous in that the push rod acts as the electrical insulation between the conducting and earthed parts of the control, with no further means of insulation being required. Furthermore, no additional mounting or guiding is required for the push rod, leading to a reduction in parts.

Preferably one or more of the push rods are acted upon by a thermally sensitive actuator such as a snap acting bimetallic actuator. The push rod again acts electrically to insulate the actuator from the current carrying parts of the appliance. Preferably the coupling between the push rod and the trip lever is such that upon operation of the actuator the leaf spring contact is opened before the push rod engages the trip lever. Thus there is preferably lost motion between the push rod and the trip lever. This is advantageous as it permits opening of the contact even in the event that the trip lever is held closed. Furthermore, the trip lever maintains the contact open even after the actuator may have reset.

Preferably the opening of the electrical contacts is limited to a microgap by providing an appropriate back stop.

Preferably the push rod has a part which engages the mounting plate which serves as a backstop for the trip lever position.

Preferably the trip lever is pivotally coupled to an operating knob which is pivotally mounted to the appliance. The mounting to the appliance takes substantially all the sideways forces applied by the user, protecting the trip lever from excessive side loads.

The knob is preferably illuminated to show an operative condition of the appliance. Most preferably the illumination means, such as a neon, associated with the knob is mounted fixedly with the knob movable relative thereto to avoid stressing the wires to the neon.

This is in itself an advantageous arrangement so from a further aspect, the invention provides an electric liquid heating appliance having a knob for operation by a user, said knob being pivotally mounted on the appliance and having an illumination means associate therewith, said illumination means being fixedly mounted to the appliance.

As mentioned above, the appliance with accordance with the present invention preferably comprises three heating elements which may, for example, be selectively connectable in series to provide the requisite heating power at different stages of operation of the appliance. The heating elements may be sheathed elements or thick film elements. In accordance with a preferred embodiment, the main heating element is a sheathed electric heating element which is mounted under the base of a liquid heating chamber of the appliance.

Preferably, however, the prolonged boil and/or the keep hot heating elements comprise thick-film heating elements. Such arrangements are advantageous in that thick-film heating elements can be manufactured more easily to produce lower heating powers than sheathed heating elements or other heaters employing resistive wire, such as wound mica heaters.

This in itself is a novel and advantageous arrangement, so from a further aspect the invention provides a liquid heating appliance comprising a primary, sheathed electric heating element arranged under the base of a liquid heating chamber of the appliance for bringing liquid in the chamber to boiling, and a secondary, lower power preferably thick film heating element for maintaining the liquid at boiling or keeping the boiled liquid warm.

Preferably, the thick-film heating element is mounted in thermal contact with the sheathed heating element such that the sheathed element acts to conduct heat from the thick-film heating element into the liquid heating chamber. This avoids the need for a separate thermal link between the thick-film heating element and the liquid heating chamber.

Preferably, therefore, the element is provided with a planar upper surface region to receive a thick-film heating element. The thick-film heating element may be provided on a ceramic tile substrate which is suitably attached to the heating element, for example by a suitable bond material or a clip. Preferably, however, the thick-film element is provided on a metallic substrate which is mounted in good thermal contact with the sheathed heating element. Accordingly, in the preferred embodiment, substantially the entire under-surface of the sheathed heating element is planar to receive the thick-film heater substrate.

Preferably the heater plate and the heating tracks provided thereon will be arranged such that the keep hot heating track at least is arranged over a portion of the sheathed element so that heat can be conducted directly from the track portion through the sheathed heating element into the liquid heating chamber.

Preferably the sheathed heating element is bonded directly to the base of the liquid heating chamber of the appliance, thereby avoiding the need for an intermediate diffusion plate. This may be achieved by suitable braze or welding. Preferably, therefore, the sheathed heating element has opposed planar surfaces.

This in itself is a novel arrangement, so from a further aspect, the present invention provides a sheathed electric heating element for attachment to the base of a liquid heating chamber of a liquid heating appliance, said element having a planar surface for engagement with said base and a further planar surface portion opposite said first planar surface and arranged generally parallel thereto.

From a further aspect, the present invention provides a sheathed electric heating element for attachment to the base of a liquid heating chamber of a liquid heating appliance, the sheath of the element having, on its surface away from the base a planar surface portion.

In this way a first planar surface of the element may be arranged against the base of the liquid heating chamber and a heater plate or indeed a thermally sensitive actuator against the opposed planar portion. In use, a thermal actuator is needed as discussed above to prevent overheating of the heater and the interposition of a heater plate between the heater and the actuator will have relatively little affect on performance of the actuator.

Preferably substantially the entire upper and lower surfaces of the sheathed heating element are planar.

Preferably the element sheath is generally rectangular, with the sides of the sheath being generally perpendicular to the planar top and bottom.

Preferably the element is formed with closely adjacent turns for reasons of compactness and also to facilitate mounting thereto of an actuator or heater. Such an arrangement is facilitated by the sheath having a rectangular section as discussed above.

Preferably the element is symmetrical, and preferably it is configured in a serpentine manner.

Preferably the element is formed so as to have one or more apertures arranged in a central region thereof to receive locators mounted to the base of the liquid heating chamber.

Most preferably, the element is formed by forming an element blank into substantially the desired configuration and then placing it in a die having the desired final element shape. The element blank is then pressed in the die such that it deforms into contact with the die surfaces, to give the final element shape. The element blank is preferably initially circular in section and it is deformed into a generally rectangular configuration, as discussed above. This reduces the cross section of the sheath, thereby compacting the insulation within the element sheath and increase the area in contact with the planar surfaces with which it is in thermal contact.

This in itself is a novel form of manufacture, so from a further aspect the invention provides a method of manufacturing a sheathed electrical heating element comprising forming an element blank into a desired configuration, placing the element in a die and pressing the element within the die such that the walls of the element deform into contact with the walls of the die, so as to reduce the cross sectional area of the element sheath to compact the insulation material therein.

The compaction also tends to deform the heating coil within the sheath to a generally rectangular configuration with the longer sides of the rectangle parallel to the longer sides of the deformed sheath. This improves the thermal path from the heater wire to the water in the appliance and keeps the temperature of the wire lower in normal operation.

Furthermore, when a sheathed element is compressed, the heating wire is stretched, leading to an increase in the resistance and reduction in wattage. In a method when an element is merely compressed between two parallel dies, the amount of lengthening is somewhat variable. However, the method of the invention which constrains the element sheath laterally as well produces much more consistent stretching, leading to a much more consistent wattage in the final heater,

Most preferably the element has cold tails arranged projecting outwardly therefrom, preferably in generally opposed directions so as to facilitate making electrical connections thereto.

In the preferred embodiment, a switching contact is made onto a or each cold tail. Preferably this electrical contact is made parallel to the plane of the element. In the preferred embodiment, therefore, the or each cold tail may mount a contact carrier with which electrical contact may be made.

This in itself is a novel arrangement, so from a further aspect, the invention provides a sheathed electrical heating element comprising terminations having an electrical contact member arranged to face generally perpendicular to the plane of the heating element.

A preferred embodiment of the invention will now be described with reference to the accompanying drawings in which:
Figure 1 is a view of an appliance in accordance with the invention;
Figure 2 shows a heater of the invention mounted to a base plate of the appliance in accordance with the invention;
Figure 3 shows the heater of Figure 2 with a further, thick film heater mounted thereover;
Figure 4 shows a top view of the composite heater arrangement of Figure 3
Figure 5 shows the layout of the thick film heater of Figure 3 in more detail;
Figure 6 shows an underneath view of a control in accordance with the invention;
Figure 7 shows a top view of the control of Figure 6;
Figure 8 shows the control of Figures 6 and 7 mounted to the assembly shown in Figure 3;
Figure 9 shows a sub-assembly of the control of Figures 6 to 8;
Figure 10 shows the sub-assembly of Figure 9 with further components added thereto;
Figure 11 shows further components of the control of Figures 6 to 8; and
Figure 12 shows the components of Figure 11 from the other side;
Figure 13 shows, schematically, a circuit diagram for the appliance;
Figures 14 to 16 show possible variations to the first described embodiment of the invention;
Figure 17 shows a detail of the steam sensitive control of the appliance;
Figure 18 shows a modification of the heater of the appliance; and
Figure 19 shows a detail of the mounting of an indicator of the appliance.

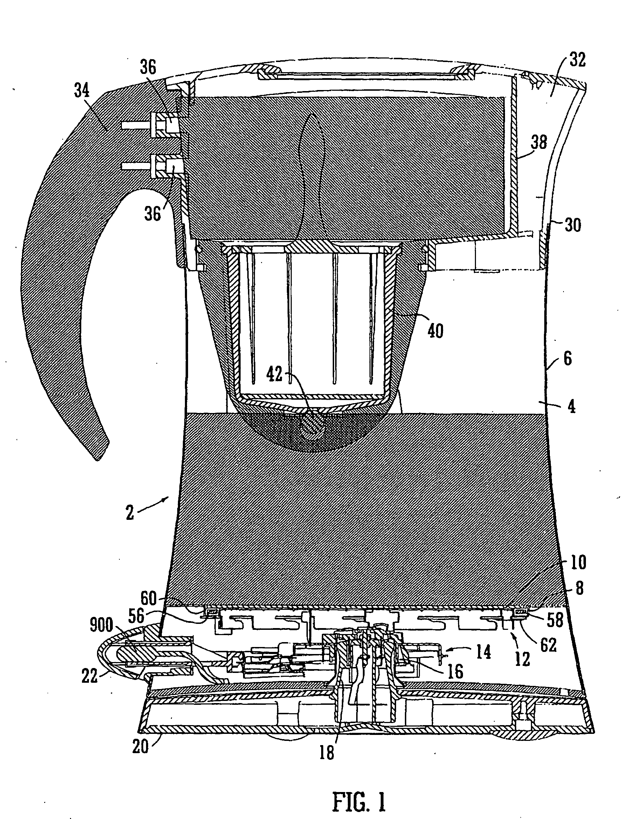

With reference to Figure 1, a water boiling appliance 2 comprises a water boiling chamber 4 defined inside a main wall 6. The wall 6 in this embodiment is of metal, but it may be equally be of plastics. An aperture 8 is formed in the bottom of the main body 6, this aperture being closed by a heating plate 10. The heating plate 10 is secured in the aperture 8 through a bayonet type coupling 12 and seal 58 as will be described further below.

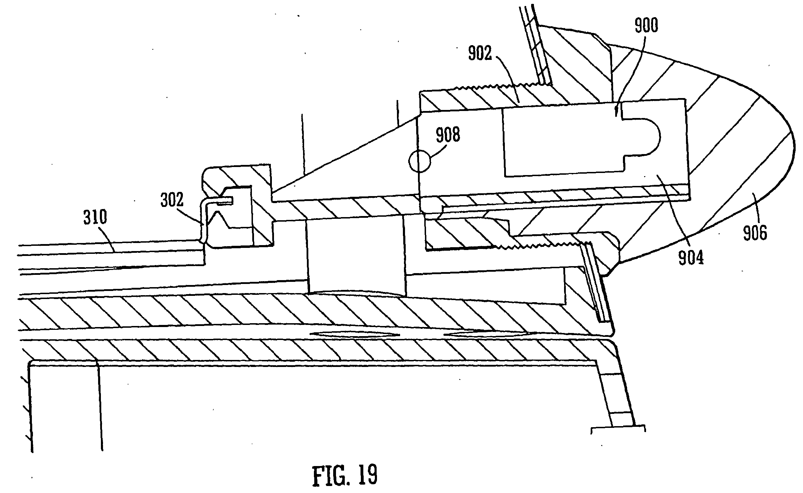

A thermally sensitive control 14 which incorporates a cordless electrical connector 16 is arranged under the heater plate 10. The connector 16 engages with a complementary connector part 18 which is provided on a power base 20 for the appliance. Operating knobs 22 coupled to the control 14 extend through an opening 24 in the bottom part of the appliance 2. The knobs 22 are pivotally mounted to the appliance and have a neon indicator 900 associated therewith, as will be discussed further below with reference to Figure 19.

The top of the wall 6 is closed by a moulding 30 which incorporates a pouring spout 32. A handle 34 for the appliance is attached to the moulding 30 by screws 36. A well 38 is defined in the moulding 30 to receive water which passes through a filter 40 into the water boiling chamber 4 of the appliance 2. The filter 40 contains a suitable granular material which can soften and/or treat the water therein. A valve 42 is provided in the bottom of the well 38 below the filter 40 to prevent water re-entering the filter 40 from the water boiling chamber 4. A further valve (not shown) may be provided in the well 38 to allow steam pressure in the chamber to build up in the event that the filter 40 is omitted. This will allow the steam control, discussed below, to operate.

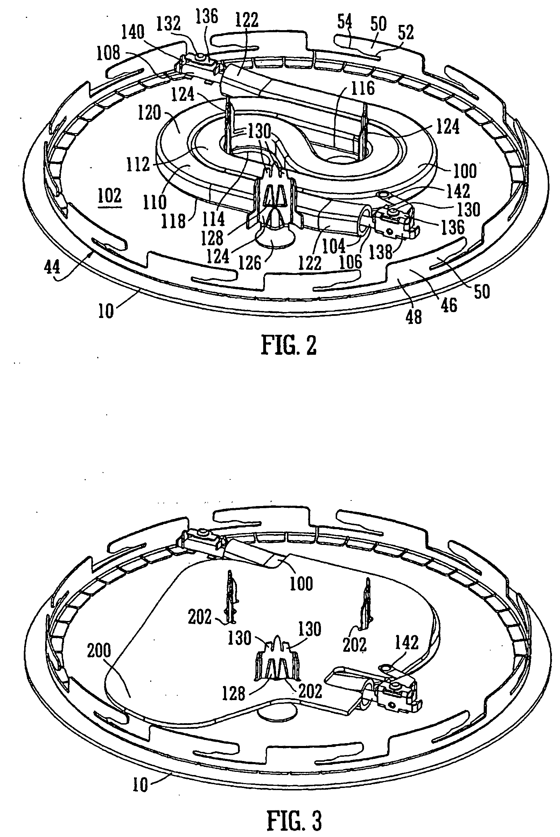

With reference now to Figure 2, the heater plate 10 comprises a bayonet mounting flange 44 which is attached, for example brazed or welded, around the circumference of the plate 10. Each bayonet formation 46 has a base portion 48 and a lug 50 projecting therefrom.

Each projecting lug 50 is provided with two clamping surfaces 52, 54 which will accommodate different thicknesses of appliance body to which it is mounted. In this regard, as shown in Figure 1, the clamping flange extends down below a flange 56 formed on the chamber wall 6. A seal 58 is arranged between the flange 56 and the peripheral undersurface 60 of the heater plate 10. A clamping ring 62 has teeth which engage with the respective clamping surfaces 52 of the bayonet formations 46 so that when engaged, the heater plate 10 is pulled downwardly to compress the seal 58 and so seal the aperture 8 in the base of the body.

In the case of a plastics walled vessel, the flange 56 on the body 6 would be thicker, meaning that the clamping ring 62 would instead engage with the clamping surfaces 54 of the bayonet lug 44.

If desired, the respective clamping surfaces 52, 54 could be provided on opposite sides of the base portion 48 of each lug 50 whereby each bayonet has a generally T-shaped configuration.

The provision of multiple clamping surfaces is advantageous in that one heater/control unit 10 can be used with multiple thicknesses of appliance in various materials, for example metal, plastics, glass or ceramic. From a further broad aspect, therefore, the invention provides a mounting arrangement for a heater in the base of a liquid heating vessel comprising a mounting flange provided with a plurality of bayonet mounting formations, said formations each having clamping surfaces spaced from upstanding from a reference surface by different amounts.

Returning to Figure 2, a sheathed electric heating element 100 is attached for example brazed to the underside 102 of the heating plate 10.

The heating element 100 has, as is traditional, an external sheath 104, inside which is arranged a heating coil which is insulated from the sheath 104 by insulating material such as magnesium oxide. Cold tails 106, 108 are connected to the heating coil and extend in opposite directions from the ends of the sheath 104. The sheath 104 may be of traditional materials, such as mild steel or aluminium, and may be attached to the plate 10 in any convenient manner.

A particularly preferred arrangement is one in which the sheath 104 is copper flashed mild steel and the element then copper brazed to the heating plate 10 in a reducing, for example hydrogen, atmosphere.

As can be seen, the element 100 is generally serpentine in shape having nested inner and outer turns 110, 112. The inner and outer turns 110, 112 touch each other along their interface. Two openings 114, 116 are provided inside the inner turn 110.

The sheath 104 is generally rectangular in cross-section. Accordingly, it has a planar lower surface 118 in contact with the undersurface 102 of the plate 10 and a planar upper surface 120.

The element is preferably made from a standard, circular section, tubular sheath, which is deformed into the rectangular section discussed. Typically, the sheath originally is of 8 mm diameter which is deformed to an 8 mm x 6 mm rectangular section. The effect of this is to reduce the cross-sectional area of the sheath 104 which acts to compact the insulating material inside the sheath.

In order to manufacture the element, the circular section sheath is located in a die having the desired external and internal shape of the final element 100 and then pressed so that the element moves into intimate engagement with the walls of the die. To avoid problems with creepage and clearance, the cold tail regions 122 of the sheath are left uncompacted.

The element 100 is located on the plate 10 by means of three locating elements 124. Two such elements are located in the apertures 114, 116 in the centre of the element 100 and the other engages the outer turn 110 of the element 100. Each locator 124 is welded, e.g. spot welded to the plate 10 by a mounting pad 126. It further comprises a push-in tongue 128 on its main body and staking lugs 130 at its upper end, for purposes which will be discussed further below.

Finally with reference to Figure 2, each cold tail 106, 108 of the element 100 is provided with a contact 132, 134. The respective contacts are mounted on the upper face 136 of folded sheet metal boxes 138, 140 which are mounted, for example crimped, onto the respective cold tail 106, 108. The contacts 132, 134 are arranged generally in the plane of the heater 100.

The contact box 138 mounted on the line side of the element 100 is further provided with a spring contact 142 for purposes which will be discussed further below. Insulating back stops (not shown) are provided above the contacts to limit the contact gap to a microgap, preferably about 0.25 mm.

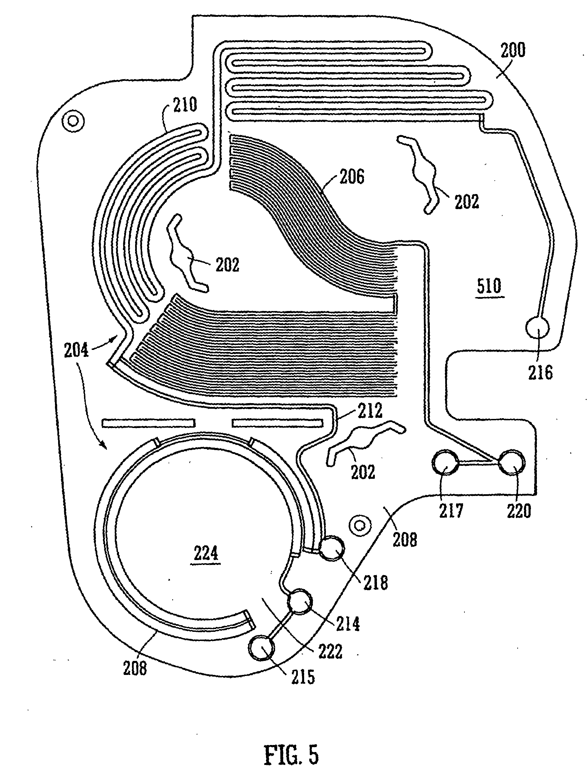

With reference now to Figures 3 to 5, a further heater plate 200 is mounted over the locators 124. The plate 200 has openings 202 through which the locators 124 extend.

The heater plate 200 is typically of stainless steel, e.g. 1.0 mm thick , provided with two thick film heating tracks 204, 206 arranged on an insulating substrate provided on one surface 208 of the plate 200.

The heating track 204 acts as a "prolonged boil" heater and has two sections, 208, 210 connected by a link 212 e.g. of silver. The heating track 206 acts as a "keep hot" heater.

The prolonged boil track section 204 has respective terminals 214, 216 and the keep hot track section a terminal 218 at one end thereof. The other end of the keep hot track section is joined to the link 212. terminal 218 of the keep hot heater track 206 is connected to the link 212 in the heater track 204. The terminal 216 of the prolonged boil heater track 204 lies under the contact 142 provided on the heater 100 whereby in use it too will be connected to the line side of the power supply. The connections to the other terminals will be described further below.

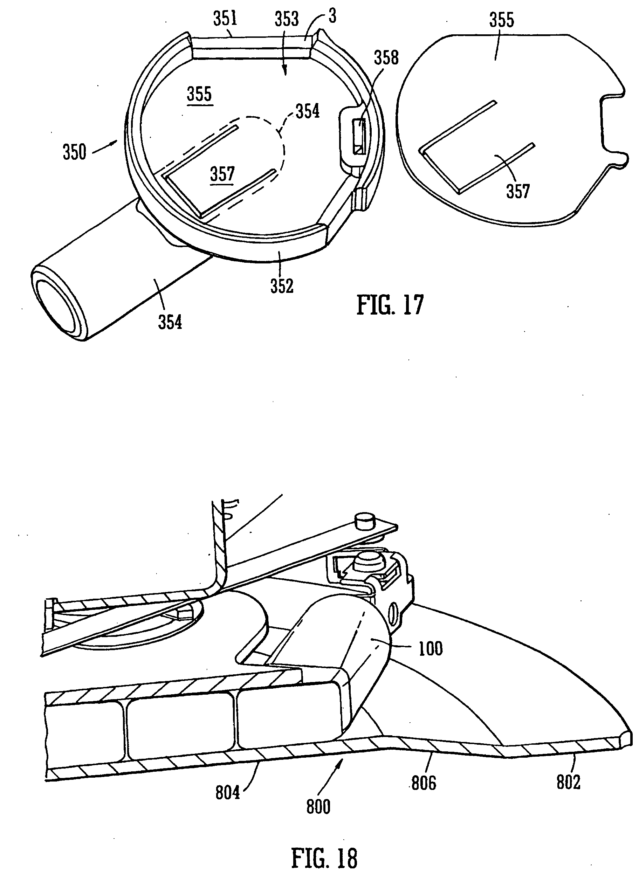

A neon terminal 215 indicating the state of the prolonged boil heater 204 is provided at one end of the track section 204 and a neon terminal 217 is provided at the end of the keep hot track 206 to indicate the state of the keep hot heater 206. A further neon connector (not shown) is provided on the contact box 130 to indicate the state of the main heating element 100. The neon terminals will be connected through respective neon indicators 900 (Figure 18) mounted in the base of the appliance to the line side of the power supply.

As stated above, the prolonged boil heater track has two sections, 208, 210. The first section 208 acts as a timer and is arranged in a region 222 away from the underlying sheathed heater 100. However, the second section 210 of the prolonged boil track 204 and the keep hot heater track 206 are arranged over the heater 100 whereby heat may be transferred from the tracks 210, 206 through the plate 200 and the heater 10 into the heating chamber 4.

It will be seen that the timer track section 208 is generally circular, surrounding an unheated central region 224. The reason for this will be described further below.

The heater plate 200 is mounted in good thermal contact with the planar upper surface 120 of the heating element 100. The element 200 is maintained in position during assembly by pushing in the tongues 128 of the locator elements 124 so that they extend over the upper surface of the heater plate 200. In addition, the plate 200 may be brazed or welded, for example spot welded or laser welded, to the heater 200. In one embodiment, for example, the plate 200 may be attached by a silver braze, which is a lower temperature braze than the copper braze used to attach the heater 100 to the plate 10. This is preferably carried out at a different time to the attachment of the sheath element since the hydrogen atmosphere in the reduction furnace at the temperature required with copper brazes would reduce the insulating layer on the plate 200, thereby rendering the heating tracks 204, 206 inoperative.

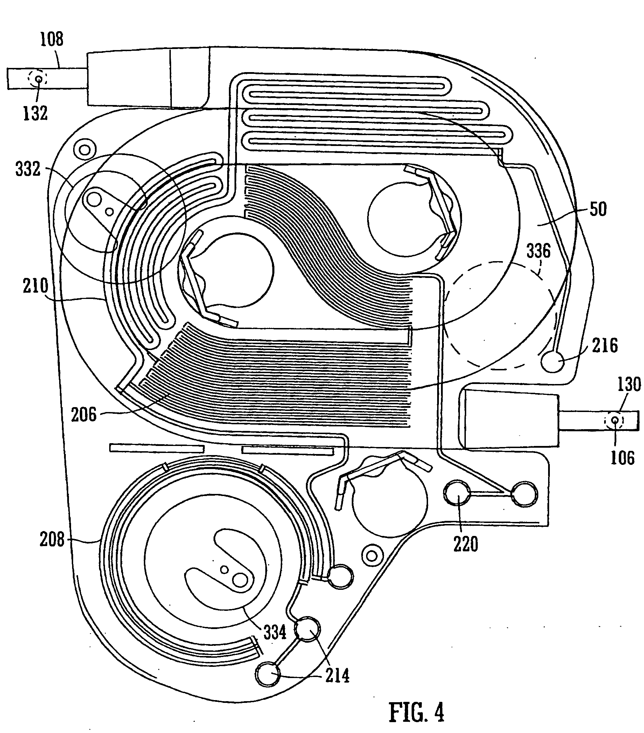

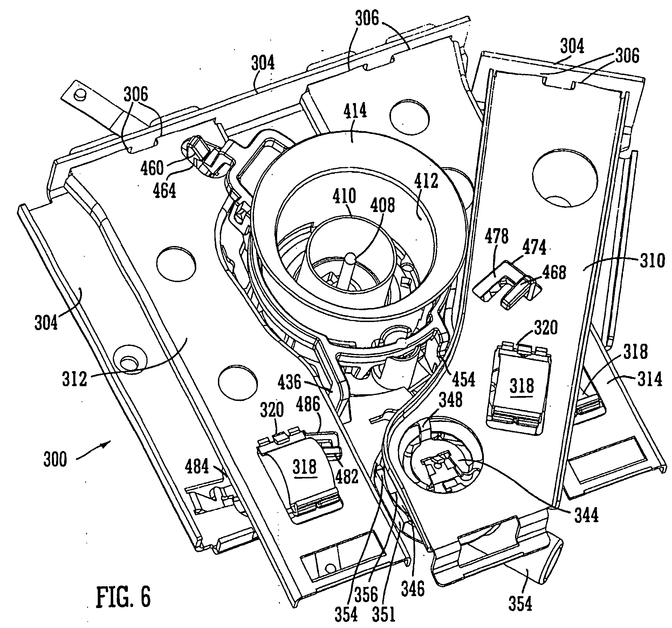

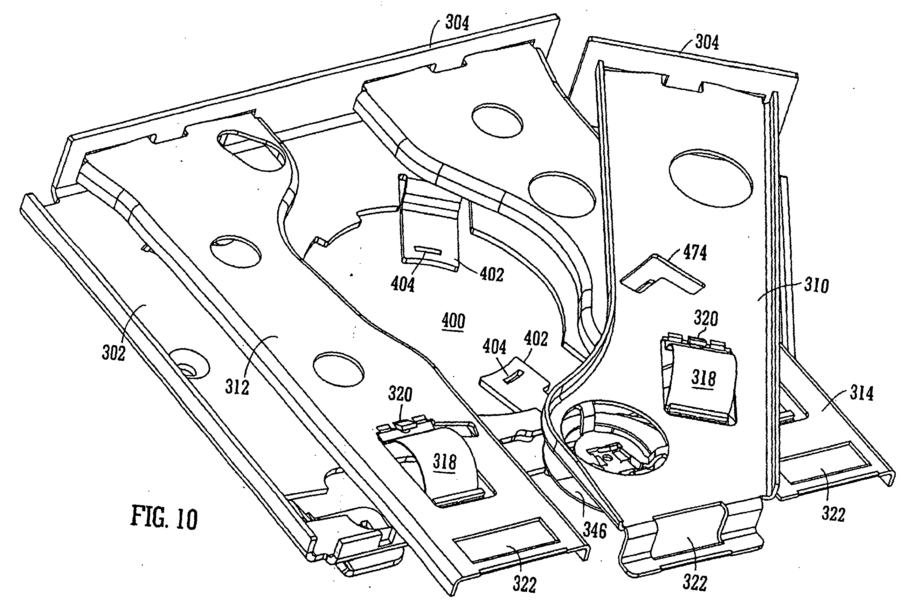

Turning now Figures 6 to 12, a control unit 300 is mounted to the element assembly shown in Figures 3 and 4.

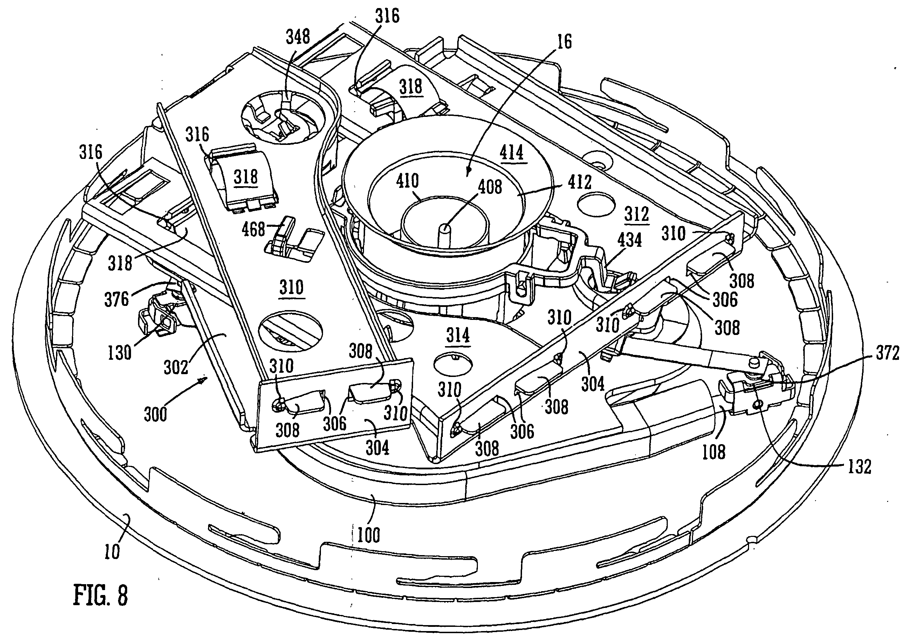

The control unit 300 comprises a metal mounting plate 302 having an upturned flange 304 at one end. The flange 304 is provided with pairs of slots 306 which receive respective pairs of lugs 308 of first, second and third trip levers 310, 312 and 214. As can be seen in Figure 8, the outer ends of each slot 306 are provided with grooves 309 in which shoulders on the outer ends of the lugs 308 engage in a pivotal manner. It has been found unnecessary to coin the bottom of the grooves 309 to a knife edge, so the grooves 309 are flat bottomed.

At the end of the mounting plate 302 opposite the flange 304, the mounting plate 302 is provided with three knife edge grooves 316 which receive one end of respective C springs 318. The other end of each C spring 318 is received in a seat 320 formed in the respective trip levers 310, 312 and 314. Each seat 320 comprises three tongues 321 which locate the end of the C spring between them. There is no need to form a knife edge pivot in the trip levers. Each C spring 318 acts as an over-centre spring permitting the respective trip levers 310, 312, 314 to move with a snap action between two positions. Respective stops may be provided on the trip levers 310, 312, 314 to limit their movements. For example, as the levers are earthed, a tongue may be formed on each to engage the mounting plate and so limit movement in the direction towards the plate.

The trip levers 310, 312, 314 have openings 322 in their free ends to receive a knob or the like.

The surface 324 of the mounting plate 302 on the other side the plate 302 from the trip levers 310, 312, 314 comprises three platforms 326, 328, 330 which mount respective snap active bimetallic actuators 332, 334, 336. The platforms 326, 328, 330 are pressed out of the plate 302 and are supported by limbs 338, 340, 342. The actuators 332, 334, 336 are manufactured to have an operation temperature of about 250°C which is higher than the temperature the heaters would reach in normal heating operations.

In addition, the free end of the trip lever 310 is formed with a mounting platform 344 for a fourth snap active bimetallic actuator 346 similar to those arranged on the other side of the plate. The platform 344 is supported by equi-spaced arms 348.

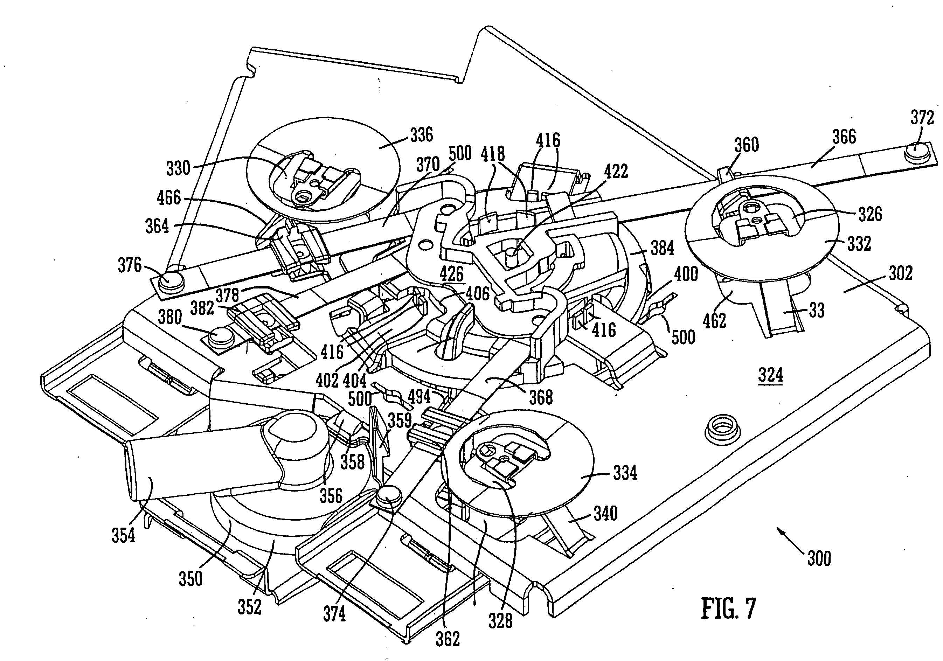

As can be seen from Figure 7, a moulding 350 is also mounted to the side 324 of the mounting plate 302. The moulding has a cup-shaped central section 352 which is open downwardly in the sense of Figure 7 and a pipe section 354 which leads into the top of the cup shaped section 352. A tongue 356 of the plate 202 extends into an aperture 358 in the moulding 350 and a clip 359 formed on the moulding extends over an edge of the plate 302.

As stated above, the lower face of the cup shaped section 352 of the moulding 350 is open. One side 351 of the cup shaped section 352 is cut away to form a platform 354 over which a peripheral portion 356 of the actuator 346 is positioned in use. This provides a reaction surface for the actuator 346 when it operates.

Preferably, as shown in Figure 17, a steam admission valve 353 is provided in the moulding 350. A relatively thin disc 355 of resilient material is provided with a centrally released tongue 357 lines the inner top of the moulding section 352. The trip lever 310 is provided with a projection (not shown) which, when the trip lever is in its cocked condition pushes the tongue 357 out of the disc 353 and up into the pipe section 354 to allow steam to be admitted into the moulding 350. When the actuator 346 operates, the tongue 357 is released, closing the flow path into the moulding 350. This prevents steam being admitted into the control for the period of the prolonged boil.

As can be seen from Figure 7, the actuators 326, 328, 330 act on respective plastics push rods 360, 362, 364 which are mounted on respective leaf springs 366, 368, 370. The leaf springs have respective contacts 372, 374, 376 provided at their free ends. These three leaf springs and a further leaf spring 378, having a contact 380 formed at its free end and a further plastics push rod 382 mounted thereon, are all mounted to a plastics moulding 384 as will be described in greater detail below.

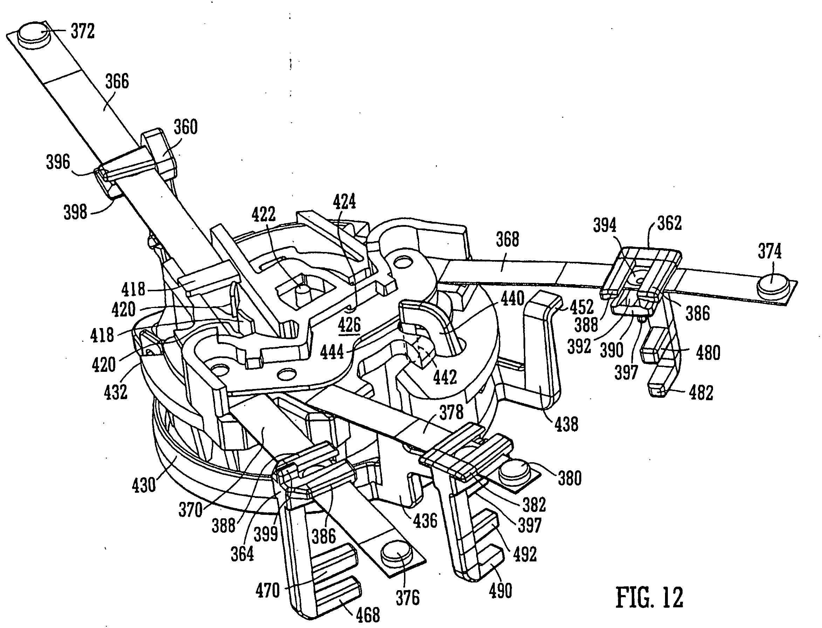

As can be seen more clearly in Figure 12, the respective push rods are clipped onto their respective leaf springs. The push rods 362, 364, 382 each include a pair of lugs 386, 388 and a platform 390 having a groove 392 which receives a pip 394 formed on the respective leaf springs. This pip 394 locates the respective push rod longitudinally on the respective leaf spring. The push rod 360, however is provided with opposed lugs 396, 398 which mount the in such a manner that it may pivot on the leaf spring 366.

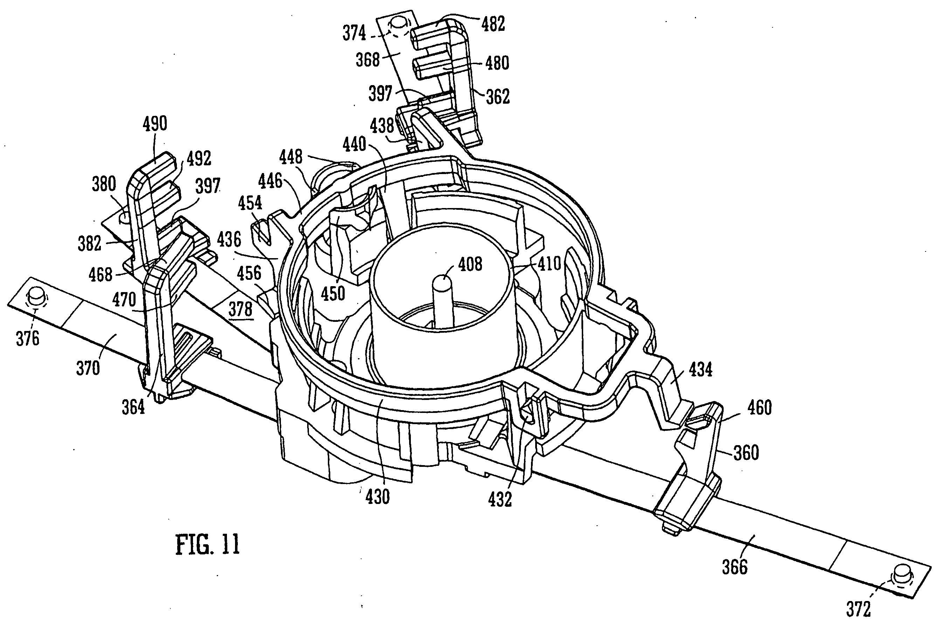

The upper surface (in the sense of Figure 11) of the each platform 390 provided on the push rods 362, 364, 382 is provided with an upstanding rib 397. This acts as a backstop for the leaf springs 368, 370, 378 once their associated trip levers have operated.

The root of lugs 386, 388 on push rod 364 are provided with a projection 399 for engaging the bimetallic actuator 336. similarly the bimetallic actuator 334 is arranged to engage the root of the lugs 386, 388 of push rod 362. Finally, the bimetallic actuator 332 is arranged to engage the lug 396 of push rod 360.

As can be seen in Figure 7, the moulding 384 is arranged in a central opening 400 of the plate 302. The aperture has three inwardly extending lugs 402 each having a slot 404 at its free end. The moulding 384 locates against the lugs 402, and openings 406 which align with the openings 404 in the lugs 402.

The moulding 384 not only acts to support the leaf springs 366, 368, 370, 378 but also the components of the cordless electrical connector 16 of the appliance. In particular, the moulding 384 receives a central line pin 408, a neutral ring 410 and an earth ring 412.

As can be seen for example from Figures 6 and 7, the earth ring 412 has an outwardly tapering open end 414 which facilitates location of the connector 16 with the base connector 18.

The upper end of the earth ring 412 has three equi-spaced pairs of lugs 416 which extend through the apertures 406 in the moulding 384 and the apertures 404 in the lugs 402 and are staked over in order to secure both the earth ring 412 to the moulding 384 and also the moulding 384 to the plate 302.

The neutral ring 410 also has a pair of upwardly projecting lugs 418 over which apertures slots 420 in the base end of the leaf spring 366 are secured in order to connect electrically the contact 372 to the neutral side of the power supply to the appliance.

The end 422 of the earth pin 408 extends through the base of the moulding 384 and through and rivetted over an aperture in the central limb 424 of a generally W-shaped brass member 426. The leaf springs 368, 370, 378 all extend under and are also rivetted to the member 426, thereby connecting the contacts 374, 376, 380 electrically to the line side of the power supply to the appliance.

The moulding 384 also serve to support a pivotally mounted ring member 430. The ring member 430 is pivotally supported on journals 432 provided on the moulding 384. A hook 434 extends from the supported end of the ring 430 while two limbs, 436, 438 are upstanding from the other end of the ring 430. A hook 440 is also upstanding from that end of the ring 430. The end 442 of the of the hook extends through an aperture 444 in the moulding 384 to lie inside the earth ring 412 such that when the appliance is positioned on its power base 20, the hook end 442 engages an upper surface of the power base electrical connector.

The portion 446 of the ring 430 between the limbs 436, 438 extends through slots 448 formed in one end of a bore 450 formed in the moulding 384. The bore 450 holds a coil spring (not shown) which acts to push the ring 430 upwardly in the sense of Figure 11, causing the ring 430 to pivot about the journals 432.

The limb 438 of the ring has a lateral lug 452 while the limb 436 has a forwardly projecting lug 454 and a lateral lug 456, the purpose of which will be discussed further below.

In assembly of the control unit 300, the moulding 384 with the ring 430 and W-shaped member 426 attached are first positioned on the lugs 402, and the line pin 408, neutral ring 410 and earth ring 412 then inserted through the moulding 384. The leaf springs 364, 368, 370, 378 with their push rods 360, 362,364, 382 are then positioned with respect to the neutral ring 210 or the w-shaped member and the top 422 of the line pin 408 and the lugs 416, 418 then staked or folded over in order to secure the assembly together. The trip levers 210, 212, 214 can then be assembled onto the plate 302.

As can be seen from Figure 7 for example, the push rods 360, 362, 364, 382 all extend through apertures formed in the mounting plate 302.

The push rod 360 is formed with a hook 460 which extends through an opening 462 in the plate 302 and further through a hole 464 formed in the trip lever 312. As can be seen in Figures 6 and 11, the hook 460 of the push rod 360 lies closely adjacent the hook 434 formed on the ring 430.

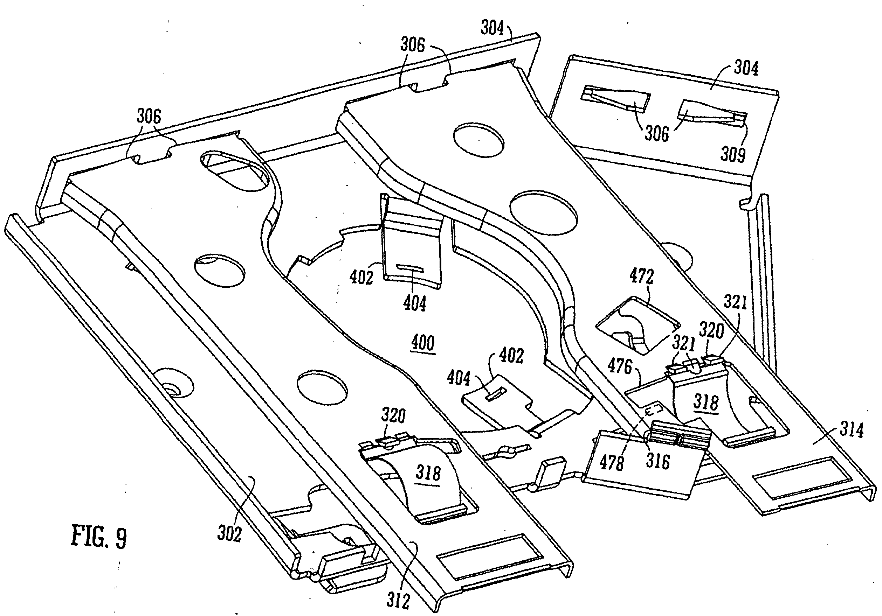

The push rod 364 extends through an aperture 466 formed in the plate 302. As can be seen from Figures 11 and 12, the push rod 362 has two projecting pegs 468, 470. The push rod extends through a square aperture 472 formed in the trip lever 314 (see Figure 9), so that the peg 470 lies between the trip levers 314, 310. However the peg 468 extends through an L-shaped aperture 474 in the trip lever 310. In fact, during assembly the peg 468 is inserted through the slot 478 of the aperture 474 and then moved across to lie over the trip lever 310.

As stated above, the projection 399 on the root of lugs 386, 388 on push rod 364 engage the bimetallic actuator 336. The peg 468 also acts as a backstop for the trip lever 310 after the lever has been tripped, the rib 397 then engaging the opposite side of the mounting plate 302.

The push rod 362 extends through an aperture 484 in the plate 302. The peg 480 is arranged between the plate 300 and the trip lever 312, but the peg 482 extends through an aperture 486 formed in the trip lever 312 and is pulled over onto the surface of the trip lever 312 as shown in Figure 6. The bimetallic actuator 334 is arranged to engage the root of the lugs 386, 388 of push rod 362. The peg 482 acts as a backstop for the trip lever 312.

Finally, push rod 382 has two pegs, 490, 492. The push rod extends upwardly through an aperture 494 in the plate 302. The peg 492 is located between the trip lever 314 and the plate 302. However, the limb 490 extends up through an aperture 476 in the trip lever 314 and is moved forwardly so as to overlie the area 478 shown in dotted lines in Figure 9. The peg 490 acts as a backstop for trip lever 314.

The lug 52 of the ring member limb 438 which extends through the plate 302 is positioned under the edge of the trip lever 312. Similarly the laterally projecting lug 456 of ring member limb 436 is positioned under an edge of the trip lever 314. The forward projecting lug 454 of the limb 436 extends under an edge of the trip lever 310.

When assembled, the control unit 300 as shown in Figure 6 can be mounted to the heater assembly shown in Figure 3. This is shown in Figure 8.

The staking lugs 130 formed on top of the locators 124 extend through slots 500 provided in the plate 302 (see Figure 7) and the lugs 130 then staked over to secure the control 300 in position.

When assembled, the various control contacts engage with the various heater contacts as follows. Contact 372 on the "neutral" leaf spring 366 engages the contact 132 provided on one cold tail 108 of the main heating element 100. Contact 376 formed on one of the "line" leaf springs 370 engages the contact 130 provided at the other cold tail 106 of the main heating element 100. Contact 374 on "line" leaf spring 368 engages with terminal 214 of the thick film heater track 204 while contact 380 on "line" leaf spring 378 engages terminal 220 of heater track 206. The leaf spring 142 on the cold tail 106 contacts terminal 216 of the track section 210. Backstops (not shown) may be provided for the contacts.

Moreover, the bimetallic actuators 332, 334, 336 make thermal contact with the heater 200. As shown schematically in Figure 4, the actuator 334 engages the unheated area 224 of the thick film heater plate, the actuator 332 over the track section 332 and the actuator 336 over an unheated area 510 of the heater plate 200. However, the actuator will be in thermal contact with the primary heater 100 through the heater plate 200.

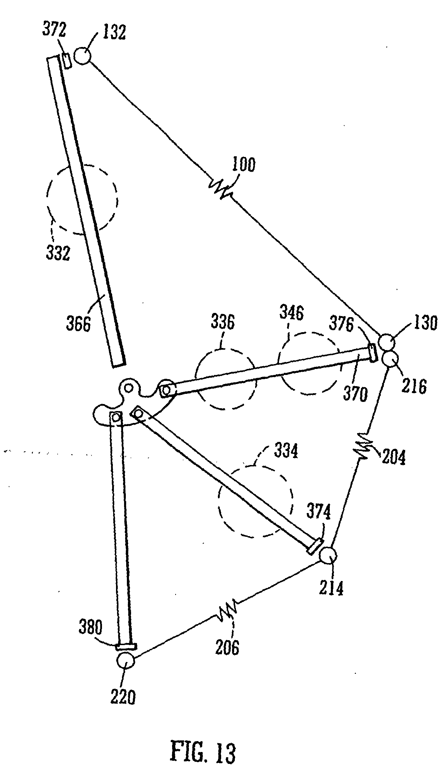

Operation of the control and heater will now be described. In normal operation, the free ends of each trip levers 310, 312 and 314 will be pushed downwardly in the sense of Figure 6 by knobs which engage the free ends of the respective trip levers. In this condition, as shown schematically in Figure 13, the respective contact pairs 372;132, 376;130, 374;214 and 380; 220 are all closed. This means that current will flow from the neutral to the line side of the supply through the leaf spring 366, main heating element 10 and leaf spring 370. The leaf spring 370 effectively shorts out the additional elements 204, 206. The main heating element 100 may be rated to deliver about 2.2kW at 240V, and it will heat the water in the chamber 4 to boiling. In this condition just the neon associated with the main heater 100 will be illuminated, indicating that the water in the appliance is being heated.

When the water boils, steam is generated and is directed from the upper part of the appliance by a passage (not shown) to the inlet pipe 354 of the moulding 354. This directs the steam onto the bimetallic actuator 346 to the trip lever 310. When the actuator 346 reaches its operating temperature, it changes its curvature and presses down against the platform 354 of the moulding wall 362, pushing the trip lever 310 upwardly in the sense of Figure 6. This movement trips the lever 310 and lifts the peg 468 of the push rod 364, which in turn lifts the contact 376 from the cold tail contact 130.

This effectively removes the short circuit via leaf spring 370, meaning that both sections 208, 210 of the prolonged boil heater track 204 is now brought into series with the main heater 100. In fact, since the keep hot track 206 joins the prolonged boil track 204 at the link 212, it will also be placed in series with section 210 of the prolonged boil heater track 204, in parallel with the section 208 thereof. However, the relative resistances of the track 206 and the track section 208 is such that essentially no current flows through the section 206, so that the heating effect of the section 206 is negligible.

The resistance of the track 204 is chosen such that the combined power of the heaters 100, 204 in this condition is about 250W, with about 28W being generated by main heater 100 and 222W by heater track 204. This allows boiling to continue at a rolling boil.

Lifting the contact 376 causes just the neon 900 associated with the prolonged boil heater track 204 to be illuminated, indicating that the water in the appliance is in the prolonged boil period.

The operation of the trip lever 310 also closes the tongue 355 on the film valve 353 thereby preventing further steam escaping into the controls and the base of the appliance.

While the water continues to boil, the timer section 208 of the prolonged boil heater track 204 begins to heat the central region 224 of the heater plate 200 against which the actuator 334 is arranged. After a predetermined time, (determined either empirically or from knowing the thermal capacity of the plate material, the necessary rise in temperature and length of conduction path) and which is typically one minute or more, the temperature of the region 224 rises sufficiently to cause the actuator 334 to operate.

When it does, it pushes upwardly on the push rod 362, lifting the contact 374 from the heater terminal 214. The peg 480 of the push rod 462 engages the underside of the trip lever 312 pushing it upwardly over centre such that the lever trips. The trip lever 312 then engages the other peg 482 which acts as a backstop for the trip lever, the projection 397 on the push rod 362 having moved into contact with the mounting plate 302. The contact 374 remains lifted by the trip lever 312 even after the actuator 334 has reset.

Lifting the contact 374 effectively brings the keep hot heater track 206 into series circuit with the main heater 100 and the main section 210 of the prolonged boil heater track 204 by taking the timer section 208 out of circuit. This is an advantageous arrangement in that it allows the region 224 of the heater plate 200 to cool relatively quickly which allows the actuator 334 to reset relatively quickly meaning that the contact 374 could be re-closed quickly if re-boiling is required.

The combined heating effect of the heater 100, prolonged boil track section 210 and keep hot section 206 is typically around 50 W with 1W being generated by heater 100, 9W by heater track section 210 and 40 W by heater track 206. 50 watts will generally be sufficient to keep the water in the appliance warm, although this may vary depending on the material of the appliance - the heat loss from a metallic appliance will be greater than from a plastics one. The heat generated in the thick film heating tracks will be conducted into the appliance through the heater 100.

The lifting of contact 374 causes just the neon 900 associated with the keep hot track 206 to become illuminated indicating that the water in the appliance is being kept warm.

All three heating elements will continue to be energised until one of a number of events occurs. Firstly, the appliance 2 could be lifted off its power base 20. When this occurs, the hook 440 of the ring member 430 will be pushed downwardly under the force of the spring arranged in the bore 448. This will cause the lug 456 of the arm 436 to engage and trip the trip lever 314, moving it upwardly in the sense of Figure 6. This causes the trip lever 314 to engage the peg 490 of the push rod 382, thereby lifting the contact 380 from terminal 220. This will break all the connections from the line pin 330 to the respective elements, thereby de-energising the appliance.

It should be noted that this "lift-off switch-off" mechanism will in fact, open all three sets of line side contacts irrespective of the state of operation of the appliance. In addition to the operation above, the forward projecting lug 454 of the arm 436 will act to trip the trip lever 210 lateral lug 502 of the arm 408 will act to trip the trip lever 212, thereby lifting the contact 376. Finally the lug 452 of arm 438 will act to trip the trip lever 312, thereby lifting the contact 374.

All three heaters 100, 204, 206 may also be disabled by manually tripping the trip levers 310, 312, 314 by the knobs attached to the free ends thereof.

Finally, in the event that the appliance boils dry and the heater overheats one, or most likely both of, the actuators 332, 336 will operate.

If the actuator 332 operates, it will act upon the push rod 360, lifting the contact 372 in the neutral side of the power supply, thereby interrupting the power supply to all three heating elements. This contact is latched open by virtue of the hook 460 of the push rod 360 latching on the hook 434 of the ring member 440. This will remain latched until such time as the appliance is lifted from its base, whereupon the ring member 400 will pivot away, thus releasing the push rod 360 and allowing the contact 372 to make once more.

If the actuator 336 operates, it will act upon the push rod 364 and trip the trip lever 310. This lifts the contact 376, thereby bringing heater 204 into series with the heater 100. This reduces the combined heating power to the "prolonged boil" level. The actuator 334 will eventually operate, bringing the keep hot element 206 into series with the main and prolonged boil heating elements 100, 204, thereby reducing the heating power to a very low level, e.g. 50 W which will result in heater temperatures no hotter than in normal use with boiling water in the appliance.

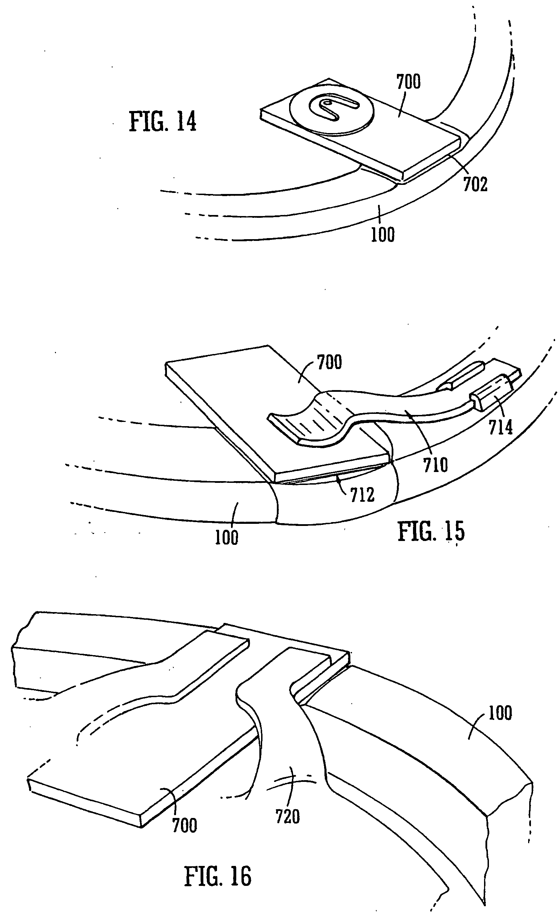

It will be apparent that various modifications can be made to the embodiment disclosed in the scope of the invention. For example, as shown in Figure 14, one or more of the heating elements may be formed on a ceramic tile 700 which is suitably bonded to a region of the heater coil 100. A thermally compliant bond material 702 which is compatible with both materials' expansion coefficients can be used for this purpose. The time delay actuator 334 can be arranged at the other end of the tile 700 such that it will take a certain time for heat to pass through the tile 700 to the actuator to allow the prolonged boil.

In an alternative arrangement shown in Figure 15, the tile 700 may be attached to the heater 100 by a spring clip 710. A thermally conductive compound and/or bonding material 712 may be placed between heater tile 700 and the element 100. The spring clip may be mounted to the heating element 100 by suitable clips 714, or the clip may be mounted from a completely separate mounting member.

Finally, as shown in Figure 16, the heater tile 700 may be mounted to the heater 100 by external clamping means 720. This may conduct heat into the tile 700 from the appliance as well as the heater 100.

It will be appreciated that the heaters 204, 206 need not be thick film heaters, but could be sheathed elements or other heaters employing coils of heating wire insulated e.g by mica or ceramic bobbins. Furthermore, the power of the heater element 100 may be higher, for example 3kW. A second element may be positioned around the first to give the necessary power.

The heater plate 10 as shown in the earlier embodiments as being planar. In a modification to this arrangement, the plate 10 may be slightly dished, as shown in Figure 18.

In this Figure, the plate 800 has a planar flange 802 which receives the bayonet mounting flange and a planar central portion 804 which is joined to the planar flange 802 by an inclined section 806.

With reference to Figure 19, there is shown a detail of the mounting of a neon indicator 900 in the appliance.

The indicator 900 is fixedly mounted to a housing 902 mounted the wall of the appliance body. The indicator 900 is nested within a channel shaped member 904 to one end of which is mounted the knob 906. The channel member 904 is pivotally mounted about a pivot 908 fixed on the housing 902. The other end of the channel member 904 is coupled to the end of the trip lever 310.

This arrangement is such that pushing the knob 906 downwardly will push the trip lever 310 upwardly, closing the contacts associated therewith. Although the neon could be mounted to the knob 906 (as shown schematically in Figure 1), a fixed mounting prevents stress on the wires leading to the neon 900 as the knob moves. It will be appreciated that the various inventions disclosed herein may have wider application than the particular type of appliance described. For example certain appliances may not need a prolonged boil capability or a keep hot capability, but could still use other aspects of the arrangements described.

## Claims

**1.** An electric liquid heating appliance comprising a primary, higher power, heating means for bringing liquid in the appliance to boiling, and a secondary, lower power, heating means for maintaining liquid, in the appliance at boiling for a predetermined time after it has boiled, a boiling sensitive control for switching from said primary heating means to said secondary heating means upon liquid in the appliance boiling, and a thermally sensitive control responsive to the temperature of the secondary heating means or heating means associated therewith for discontinuing boiling of the liquid in the vessel after a predetermined time.

**2.** An electric liquid heating appliance comprising a primary, higher power, heating means for bringing liquid in the appliance to boiling, and a secondary, lower power, heating means for maintaining liquid in the appliance at boiling for a predetermined time after it has boiled, a boiling sensitive control for switching from said primary heating means to said secondary heating means upon liquid in the appliance boiling, and a timing heater associated with a control for discontinuing boiling of the liquid in the vessel after a predetermined time.

**3.** An appliance as claimed in claim 1 or 2 wherein the thermally sensitive control comprises a thermally sensitive actuator such as a bimetallic actuator which is arranged thermally remote from the secondary heating means, such that the temperature of the actuator will not reach its operating temperature until a predetermined period of time has elapsed.

**4.** An appliance as claimed in claim 3 wherein the actuator is arranged at a spacing from the heating means and linked thereto by a thermal conduction member having a known thermal capacity.

**5.** An appliance as claimed in claim 4 wherein the secondary heating element comprises a thick-film heating element, having a timing section with which the actuator is associated.

**6.** An appliance as claimed in claim 5 wherein the timing section is arranged at one end of the element.

**7.** An appliance as claimed in claim 5 or 6 wherein the timing section is arranged on a part of the substrate removed from the main heating means.

**8.** An appliance as claimed in claim 7 where the actuator is arranged in a region of the substrate spaced from the timing section of the heating track.

**9.** An appliance as claimed in claim 8 wherein the timing section of the track is arranged in a circular pattern around an unheated region, and the actuator arranged in thermal contact with that central unheated region.

**10.** An appliance as claimed in any preceding claim further comprising tertiary "keep hot" heating means.

**11.** An appliance as claimed in claim 10 wherein the tertiary heating means is designed to operate continuously.

**12.** An appliance as claimed in any preceding claim wherein the boiling sensitive control is sensitive either to steam generated upon boiling or to the sensing a temperature indicative of boiling.

**13.** An appliance as claimed in claim 12 wherein means are provided for preventing steam entering, or reducing significantly the amount of steam entering the control during the period of prolonged boiling.

**14.** An appliance as claimed in claim 13 wherein the steam path to the control comprises valve means which closes the steam path after operation of the boiling sensitive control.

**15.** An electric liquid heating appliance comprising a primary, higher power, heating means for bringing liquid in the appliance to boiling, and a secondary, lower power, heating means for maintaining liquid in the appliance at boiling for a predetermined time after it has boiled, a boiling sensitive control for switching from said primary heating means to said secondary heating means upon liquid in the appliance boiling, and valve means preventing or substantially reducing the amount of steam entering the said control after it has operated.

**16.** An appliance as claimed in any preceding claim wherein the respective boiling and thermally sensitive controls operate respective manually resettable trip levers.

**17.** An appliance as claimed in claim 16 wherein a further trip lever is associated with (the) tertiary heating means.

**18.** An appliance as claimed in claim 18 wherein the trip levers are tripped by the appliance being lifted.

**19.** A liquid heating appliance having primary heating means for heating liquid in the appliance to boiling, secondary heating means for maintaining liquid at boiling for a predetermined period after boiling and tertiary heating means for keeping liquid in the appliance warm after it has boiled, comprising a control configured such that when said appliance is lifted from a supporting base, switch means are opened to disconnect the power supply to all three heating means.

**20.** A control for a liquid heating appliance having primary heating means for heating liquid in the appliance to boiling, secondary heating means for maintaining liquid at boiling for a predetermined period after boiling and tertiary heating means for keeping liquid in the appliance warm thereafter, said control being configured such that when said appliance is lifted from a supporting base, switch means are opened to disconnect the power supply to all three heating means.

**21.** Apparatus as claimed in claim 19 or 20 comprising a common trip member.

**22.** A liquid heating appliance having primary heating means for heating liquid in the appliance to boiling, secondary heating means for maintaining liquid at boiling for a predetermined time after boiling has commenced and tertiary heating means for keeping liquid in the appliance warm thereafter, and a control for supplying power to said heating means, each said heating means having associated therewith a manually operable trip lever within the control.

**23.** A control for a liquid heating appliance having primary heating means for heating liquid in the appliance to boiling, secondary heating means for maintaining liquid at boiling for a predetermined time after boiling has commenced and tertiary heating means for keeping liquid in the appliance warm thereafter, said control supplying power selectively to said heating means, and comprising respective manually operable trip levers associated with said respective heating means.

**24.** An appliance as claimed in any preceding claim comprising an overheat protection control.

**25.** An appliance as claimed in claim 24 wherein the or a primary heating means is provided with one and preferably at least two independently operable overheat protection mechanisms, preferably in opposite poles of the power supply.

**26.** An appliance as claimed in claim 24 or 25 wherein the overheat protection control is arranged such that it will disconnect power to all heating means when the appliance overheats.

**27.** An appliance as claimed in claim 24, 25 or 26 wherein the overheat control is latched after operation to prevent reenergisation of the heating means.

**28.** An appliance as claimed in claim 27 as dependent directly or indirectly upon claim 21 wherein the overheat control is latched by the trip member such that when the appliance is lifted, the overheat protection control is delatched.

**29.** An appliance as claimed in any preceding claim wherein a or each trip lever of the control is earthed.

**30.** A thermally sensitive control for a liquid heating appliance comprising a trip lever for opening a set of electrical contacts, said trip lever being metallic and earthed.

**31.** A control as claimed in claim 30 wherein the or each trip lever is mounted to an earthed metallic mounting plate.

**32.** A control as claimed in claim 30 or 31 wherein the or each trip lever is operatively coupled to a contact carrying leaf spring of the control by an insulating push rod mounted on the leaf spring.

**33.** A control as claimed in claim 32 wherein one or more of the push rods are acted upon by a thermally sensitive actuator such as a snap acting bimetallic actuator.

**34.** A control as claimed in claim 33 wherein the coupling between the push rod and the trip lever is such that upon operation of the actuator the leaf spring contact is opened before the push rod engages the trip lever.

**35.** A control as claimed in any of claims 30 to 34 wherein the trip lever is pivotally coupled to an operating knob which is pivotally mounted to the appliance.

**36.** A control as claimed in claim 35 wherein the knob is illuminated by illumination means fixedly mounted to the appliance.

**37.** An electric liquid heating appliance having a knob for operation by a user, said knob being pivotally mounted on the appliance and having an illumination means associated therewith, said illumination means being fixedly mounted to the appliance.

**38.** A liquid heating appliance comprising a primary, sheathed electric heating element arranged under the base of a liquid heating chamber of the appliance for bringing liquid in the chamber to boiling, and a secondary, lower power, preferably thick film, heating element for maintaining the liquid at boiling or keeping the boiled liquid warm.

**39.** An appliance as claimed in claim 38 wherein the thick-film heating element is mounted in thermal contact with the sheathed heating element such that the sheathed element acts to conduct heat from the thick-film heating element into the liquid heating chamber.

**40.** An appliance as claimed in claim 39 wherein the sheathed heating element is provided with a planar surface region to receive a thick-film heating element.

**41.** An appliance as claimed in claim 40 wherein the thick-film heating element is provided on a ceramic tile substrate which is mounted to the heating element.

**42.** An appliance as claimed in claim 40 wherein the thick-film heating element is provided on a metallic substrate which is mounted in good thermal contact with the sheathed heating element.

**43.** An appliance as claimed in claim 40, 41 or 42 wherein substantially the entire under-surface of the sheathed heating element is planar to receive the thick-film heater substrate.

**44.** An appliance as claimed in any of claims 38 to 43 wherein the sheathed heating element is bonded directly to the base of the liquid heating chamber of the appliance.

**45.** An appliance as claimed in any of claims 38 to 44 wherein the sheathed heating element has opposed planar surfaces.

**46.** A sheathed electric heating element for attachment to the base of a liquid heating chamber of a liquid heating appliance, said element having a planar surface for engagement with said base and a further planar surface portion opposite said first planar surface and arranged generally parallel thereto.

**47.** A sheathed electric heating element for attachment to the base of a liquid heating chamber of a liquid heating appliance, the sheath of the element having, on its surface away from the base a planar surface portion.

**48.** A sheathed electric heating element as claimed in claim 46 or 47 wherein substantially the entire upper and lower surfaces of the sheathed heating element are planar.

**49.** A sheathed electric heating element as claimed in claim 46, 47 or 48 wherein the element sheath is generally rectangular, with the sides of the sheath being generally perpendicular to the planar top and bottom.

**50.** A sheathed electric heating element as claimed in any of claims 46 to 49 wherein the element is formed with closely adjacent turns.

**51.** A sheathed electric heating element as claimed in any of claims 46 to 50 wherein the element is symmetrical, and preferably configured in a serpentine manner.

**52.** A sheathed electric heating element as claimed in any of claims 46 to 51 wherein the element is formed with one or more apertures arranged in a central region thereof to receive locators mounted to the base of the liquid heating chamber.

**54.** A sheathed electric heating element as claimed in any of claims 46 to 53 wherein the element has cold tails arranged projecting outwardly therefrom, preferably in generally opposed directions.

**55.** A sheathed electric heating element as claimed in any of claims 46 to 54 wherein a switching contact is made onto a or each cold tail, preferably parallel to the plane of the element.

**56.** A sheathed electrical heating element comprising terminations having an electrical contact member arranged to face generally perpendicular to the plane of the heating element.

**57.** A method of manufacturing a sheathed electrical heating element comprising forming an element blank into a desired configuration, placing the element in a die and pressing the element within the die such that the walls of the element deform into contact with the walls of the die, so as to reduce the cross sectional area of the element sheath to compact the insulation material therein.

**58.** In combination, a sheathed electric heating element and a thick film heating element, said thick film heating element having a substrate which is mounted to or against the sheathed element.

**59.** An electric liquid heating appliance comprising a primary, higher power, heating means for heating liquid in the appliance to a first predetermined temperature, and a secondary, lower power, heating means for maintaining liquid in the appliance at a second, lower, temperature after said first temperature has been reached.
